# FASCICULE DE BREVET EUROPEEN

(11) **EP 4 012 572 B1**
(45) Date de publication et mention de la délivrance du brevet: **03.06.2026**
(21) Numéro de dépôt: 20213948.1
(22) Date de dépôt: 14.12.2020
(51) Int. Cl.: G06F 16/178

(54) **STRUCTURE DE DONNÉES ET PROCÉDÉ DE MISE EN OEUVRE ASSOCIÉ**
DATENSTRUKTUR UND ENTSPRECHENDES UMSETZUNGSVERFAHREN
DATA STRUCTURE AND METHOD FOR IMPLEMENTING SAME

(43) Date de publication de la demande: 15.06.2022
(73) Titulaire: BULL SAS, 78340 Les Clayes-sous-Bois (FR)
(72) Inventeur: BRUNET, Philippe, 94700 Maisons-Alfort (FR)
(74) Mandataire: Novagraaf Technologies

(56) Documents cités:
- EP-A1- 1 367 508
- US-A1- 2008 243 891
- YADDOW WAYNE: "The Importance of Data Mapping for Data Integration Projects - EWSolutions", 13 November 2020 (2020-11-13), XP055799813, Retrieved from the Internet <URL:https://web.archive.org/web/20201113165511/https://www.ewsolutions.com/the-importance-of-data-mapping-for-data-integration-projects> [retrieved on 20210429]
- ANONYMOUS: "Proprietary file format - Wikipedia", 12 May 2020 (2020-05-12), XP093146194, Retrieved from the Internet <URL:https://en.wikipedia.org/w/index.php?title=Proprietary_file_format&oldid=956207172> [retrieved on 20240327]

## Description

### STRUCTURE DE DONNÉES ET PROCÉDÉ DE MISE EN ŒUVRE ASSOCIÉ

### Domaine technique

L'invention concerne le domaine des équipements et méthodes de traitement de données spécialement adaptés à des fonctions spécifiques. En particulier, il concerne un procédé de conversion d'un premier fichier de données, présentant un premier format, en un deuxième fichier de données, présentant un deuxième format générique différent du premier format. L'invention concerne également un support d'enregistrement et une structure de données associés au procédé.

### Technique antérieure

On connait des plateformes informatiques d'agrégation de données.

De telles plateformes informatiques remplissent généralement trois missions. La première mission, dite d'enquête, permet de reconstituer le cours passé des agissements (actions, déplacements, contacts, etc.) de suspects liés à un ou des évènements objets d'une investigation. La seconde mission, dite de suivi, permet d'être informé en permanence sur le cours présent des agissements de groupes de personnes susceptibles d'entreprises illégales. La troisième mission, dite de surveillance, est relative à la détection de signaux avant-coureurs d'évènements ou à celle d'indices d'entreprises illégales. Les données de communications et de localisation qui leur sont liées constituent une source de données de plus en plus importante pour ces plates-formes.

Pour fonctionner, de telles plateformes informatiques nécessitent d'importer des données qui proviennent de différentes sources.

Du fait des nombreux formats de sources qui existent, les unités de traitement de ces plateformes informatiques n'ont pas la capacité de traiter tous les types de données produits.

Ainsi, il est connu que certaines données sont tout simplement ignorées, car elles sont inconnues de ces plateformes informatiques.

Le document US2008243891A1 divulgue l'utilisation de relations de correspondance entre formats de données pour la conversion dans un réseau.

### Résumé de l'invention

L'invention vise à pallier cet inconvénient.

L'invention vise en particulier un procédé de conversion d'un premier fichier de données, dit fichier d'origine de conversion, en un deuxième fichier de données, dit fichier de destination de conversion. Dans l'invention, le fichier d'origine de conversion présente un format propriétaire prédéterminé spécifique à une quelconque parmi une pluralité de sources de données. Par ailleurs, le fichier de destination de conversion présente un format générique prédéterminé indépendant de l'une quelconque parmi la pluralité de sources de données. En outre, le format générique prédéterminé est associé à un schéma prédéterminé qui décrit la structure sémantique du format générique prédéterminé. Le procédé comprenant les étapes suivantes :
- une étape d'obtention de relations de correspondance entre le format du fichier d'origine de conversion et le format du fichier de destination de conversion,
- une étape de formation du fichier de destination de conversion à partir du schéma prédéterminé et des données du fichier d'origine de conversion qui sont impliquées dans les relations de correspondance,
- une étape de détection s'il reste des données du fichier d'origine de conversion qui ne sont pas impliquées dans les relations de correspondance, dites données sans correspondance, et dans ce cas, une étape d'extension du format du fichier de destination de conversion pour y inclure tout ou partie des données sans correspondance.

Dans une première mise en œuvre, les données du fichier d'origine de conversion sont relatives à au moins un signal électromagnétique discursif qui indique la mise en œuvre d'au moins un service de communication dans au moins un réseau de télécommunication via au moins un support de communication, les données décrivant le type du service et/ou du support de communication, l'instant de début et éventuellement l'instant de fin du service de communication et un ou plusieurs nœuds du réseau de télécommunication impliqués dans la mise en œuvre du service de communication discursif.

Dans une deuxième mise en œuvre, les données comprennent des informations issues de l'interception de télécommunications, dites données du domaine « COMINT ».

Dans une troisième mise en œuvre, le schéma prédéterminé comprend une pluralité de champs capables de décrire le plus grand nombre de données associées à la pluralité de source de données.

Dans une quatrième mise en œuvre, l'étape d'obtention de relations de correspondance comprend une étape d'analyse d'au moins un fichier intermédiaire qui définit des relations de correspondance prédéfinies entre au moins un mot-clé associé au contenu de la pluralité de sources de données et tout ou partie des champs du format du schéma prédéterminé.

Dans un exemple de la quatrième mise en œuvre, l'étape d'analyse du fichier intermédiaire comprend,
- une étape de calcul d'un degré de correspondance entre le mot-clé associé au contenu de la pluralité de sources de données et les champs du format du schéma prédéterminé, et
- une étape de détermination du champ du format du schéma prédéterminé ayant un degré de correspondance supérieur à un seuil de degré de correspondance prédéfini, en tant que champ cible du format du schéma prédéterminé correspondant au mot-clé.

Dans une cinquième mise en œuvre, le schéma prédéterminé est un schéma XSD et l'étape de formation du fichier de destination de conversion comprend la formation d'un fichier au format XML.

Dans une sixième mise en œuvre, le schéma prédéterminé est un schéma JSON et l'étape de formation du fichier de destination de conversion comprend la formation d'un fichier au format JSON.

Dans une septième mise en œuvre, lorsqu'elle dépend de la deuxième mise en œuvre, l'étape de formation comprend une étape d'identification, à partir du fichier d'origine de conversion, d'au moins un chemin unique emprunté par un service de communication qui a transité via le ou les nœuds du réseau de télécommunication impliqués dans la mise en œuvre du service de communication discursif.

Dans cette mise en oeuvre, on agence le schéma prédéterminé de manière à séparer, d'une part, le ou les nœuds du réseau de télécommunication impliqués dans la mise en œuvre du service de communication discursif et, d'autre part, le ou les chemins uniques empruntés par un service de communication qui a transité via le ou les nœuds du réseau de télécommunication impliqués dans la mise en œuvre du service de communication discursif.

Dans une huitième mise en œuvre, l'étape d'extension du format du fichier de destination de conversion comprend l'extension d'un champ prédéterminé du schéma prédéterminé.

L'invention concerne également un support d'enregistrement enregistrant un programme d'instructions pouvant être exécuté par un processeur pour exécuter toutes les étapes du procédé selon l'une quelconque des mises en œuvre précédentes.

L'invention concerne aussi une structure de données à format générique prédéterminé et indépendant de toute source de données pour stocker des données, la structure de donnée étant obtenue par un procédé de conversion selon l'une quelconque des mises en œuvre précédentes à partir d'un fichier de données et d'un schéma prédéterminé qui définit la structure du format générique prédéterminé.

Dans une première mise en œuvre, le schéma prédéterminé est un schéma XSD et la structure de données est un fichier XML.

Dans une deuxième mise en œuvre, le schéma prédéterminé est un schéma JSON et la structure de données est un fichier JSON.

Dans une troisième mise en œuvre, la structure comprend en outre une première partie de structure de données et une deuxième partie de structure de données qui sont séparées l'une de l'autre, la première partie de structure de données comprenant une liste du ou des nœuds du réseau de télécommunication impliqués dans la mise en œuvre du service de communication discursif, la deuxième partie de structure de données comprenant une liste du ou des chemins uniques empruntés par un service de communication qui a transité via le ou les nœuds du réseau de télécommunication impliqués dans la mise en œuvre du service de communication discursif.

### Brève description des dessins

D'autres caractéristiques et avantages de l'invention seront mieux compris à la lecture de la description qui va suivre et en référence aux dessins annexés, donnés à titre illustratif et nullement limitatif.

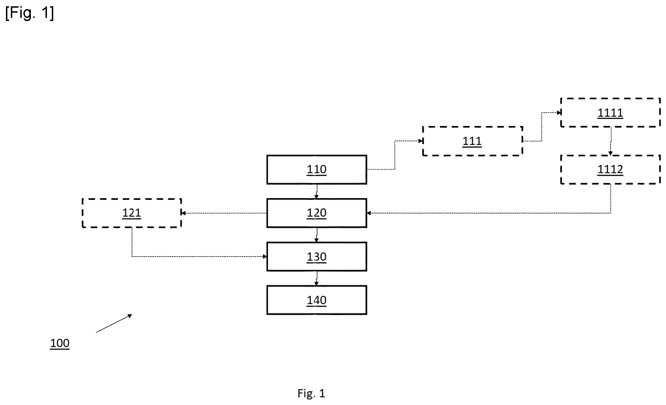

[Fig. 1] La figure 1 représente un procédé de mise en œuvre de l'invention.

La figure unique ne respecte pas nécessairement les échelles, notamment en épaisseur, et ce à des fins d'illustration.

### Description des modes de réalisation

L'invention se rapporte à une structure de données générique et extensible de transfert de données entre des dispositifs d'interception de communication et une chaine de traitement des informations/communications interceptées.

L'objet de cette invention est de permettre de couvrir l'ensemble des dispositifs d'interception de communication, que ceux-ci soient dédiés aux interceptions de communications téléphoniques ou encore de flux internet.

Plus précisément, l'invention concerne un procédé de conversion d'un premier fichier de données, dit fichier d'origine de conversion, en un deuxième fichier de données, dit fichier de destination de conversion.

Dans un exemple non limitatif, les données selon l'invention sont des données de renseignement. Toutefois, l'invention peut s'appliquer à d'autres types de données qu'il est nécessaire de convertir d'un premier format vers un format générique.

Dans une mise en œuvre particulière, les données sont relatives à au moins un signal électromagnétique discursif qui indique la mise en œuvre d'au moins un support de communication dans au moins un réseau de télécommunication de type connu via au moins un service de communication.

On entend par signal électromagnétique discursif, un signal électromagnétique qui a pour vocation de transmettre une information entre au moins deux dispositifs.

Par exemple, un signal électromagnétique associé à une communication établie selon un protocole de télécommunication donnée (p. ex., appels téléphoniques, WhatsApp, Signal ou Skype ; messages SMS, MMS) est du type discursif, car un tel signal électromagnétique permet de transmettre une information entre au moins deux dispositifs.

En revanche, par exemple, un signal radar est un signal non discursif, car il n'a pas pour vocation de transmettre une information entre au moins deux dispositifs. En effet, de manière connue, un radar est un outil de télédétection, qui repère les objets à distance. Pour cela, le radar émet des ondes puis compare les ondes réfléchies sur ces objets pour obtenir des informations sur la distance des objets, leurs vitesses, etc.

On entend par support de communication, une des méthodes d'échange ou de diffusion d'information qui sont généralement mises en œuvre par un réseau de télécommunication.

On entend par service de communication, un moyen qui permet à des utilisateurs d'un réseau de télécommunication d'employer un ou plusieurs supports de communication.

Ainsi, de manière non limitative, un support de communication peut être choisi parmi un appel audio, un appel vidéo, un message texte, un message multimédia, un email ou une session Web. Un service de communication peut permettre d'employer un ou plusieurs supports de communication. Par exemple, le service Skype permet d'utiliser au moins des supports de communication par audio, par vidéo et par message texte.

Dans une mise en œuvre particulière, les données comprennent des informations issues de l'interception de télécommunications, dites données du domaine « COMINT » (« Communications Intelligence », en anglais ; renseignement issu de l'interception de télécommunications, en français).

Dans un premier exemple, les données COMINT décrivent un ou plusieurs nœuds du réseau de télécommunication impliqués dans la mise en œuvre du service de communication discursif.

En pratique, dans cet exemple, les données COMINT correspondent à des identifiants des équipements et/ou des utilisateurs de ces équipements.

Par exemple, un équipement peut être un téléphone mobile, un téléphone fixe, un ordinateur, une tablette, un serveur informatique ou un équipement de réseau tels un commutateur, un routeur, une station de base ou un contrôleur de réseau radio.

Ainsi, de manière non limitative, un identifiant peut être une adresse IP (« Internet Protocol », en anglais), une adresse MAC (« Media Access Control », en anglais ; contrôle d'accès au support, en français), un numéro de téléphone MSISDN (« Mobile Station ISDN Number », en anglais ; numéro d'abonné, en français), un identifiant de terminal IMEI (« International Mobile Equipment Identity », en anglais ; identité internationale d'équipement mobile, en français), un identifiant d'abonnement IMSI (« International Mobile Subscriber Identity », en anglais ; identité internationale d'abonné mobile, en français), un identifiant de station de base BSIC (« Base Station Identity Code », en anglais ; identifiant de station de base, en français).

Dans un deuxième exemple, les données COMINT décrivent le type du support et/ou service de communication utilisé. De manière non limitative, comme indiqué plus haut, le type de support de communication peut être choisi parmi un appel audio, un appel vidéo, un message texte, un message multimédia, un email ou une session Web, tandis que le type service de communication peut être choisi parmi WhatsApp, Signal ou Skype.

Dans un troisième exemple, les données COMINT décrivent l'instant de début et éventuellement l'instant de fin du service de communication.

Ainsi, de manière classique, un appel vidéo, un appel audio et une session Web comprennent un instant de début et un instant de fin. Cependant, un message texte, un message multimédia, un email ne comprennent qu'un instant de début.

Dans un quatrième exemple, les données COMINT décrivent les positions successives d'un équipement mobile de communication, soit sous forme d'une localisation directe, soit sous forme d'une localisation indirecte, et plus imprécise, par le biais des localisations des équipements relais d'un réseau de télécommunication auxquels l'équipement mobile s'est connecté.

Dans l'invention, le fichier d'origine de conversion présente un format propriétaire prédéterminé spécifique à une quelconque parmi une pluralité de sources de données.

De manière classique, une source de données est un capteur adapté pour intercepter des communications dans un réseau de télécommunications. De tels capteurs peuvent relever d'entités tierces différentes comme les opérateurs de télécommunication ou les forces de sécurité intérieure ou extérieure d'un État. Par ailleurs, en pratique, chaque source de données génère des fichiers de données selon un ou plusieurs formats qui lui sont propres.

Toujours dans l'invention, le fichier de destination de conversion présente un format générique prédéterminé indépendant de l'une quelconque parmi la pluralité de sources de données.

L'un des objectifs de l'utilisation d'un format générique est d'assurer l'indépendance des moyens de traitement informatique vis-à-vis des formats des fichiers d'origine de conversion. Un autre objectif de l'utilisation d'un format générique est son emploi pour agréger des données qui proviennent de différentes sources. Un autre objectif est de permettre l'échange et le partage de données reçues de différentes sources entre différents organismes exploitants.

Dans l'invention, le format générique prédéterminé est associé à un schéma prédéterminé qui décrit la structure sémantique du format générique prédéterminé. En d'autres termes, le schéma prédéterminé est configuré pour spécifier le contenu du format générique prédéterminé.

Dans une mise en œuvre particulière, le schéma prédéterminé comprend une pluralité de champs capables de décrire le plus grand nombre de données associées à la pluralité de sources de données.

En pratique, il s'agit principalement de couvrir les sources de données qui opèrent dans les domaines des communications téléphoniques et des communications internet.

Ainsi, le schéma prédéterminé permet de décrire la plupart des données produites par les sources connues de données. De manière non limitative, il s'agit, pour chaque source de données, de l'identifiant d'un capteur d'interception associé, de la date de production du fichier d'origine de conversion et du contenu utile des données interceptées par le capteur d'interception. Par exemple, le contenu utile peut comprendre des informations telles que :
- la caractérisation du signal électromagnétique discursif (p. ex. date de début et de fin du signal, identifiants des dispositifs à son origine et à sa réception, identifiants du ou des supports de communication, identifiants du service de communication) ;
- les contenus informationnels véhiculés par le signal (p. ex. texte, audio, vidéo) ;
- la caractérisation des dispositifs de transport du signal électromagnétique discursif et cheminements du signal à travers ces dispositifs ; et
- la localisation des dispositifs d'émission ou de réception.

Dans un premier exemple, le schéma prédéterminé est un schéma XSD («XML Schema Definition », en anglais ; schéma de définition XML, en français).

Dans un deuxième exemple, le schéma prédéterminé est un schéma JSON (« JavaScript Object Notation », en anglais ; langage d'échange de données textuelles basé sur JavaScript).

Dans l'exemple de la figure 1, le procédé 100 comprend tout d'abord une étape d'obtention 110 de relations de correspondance entre le format du fichier d'origine de conversion et le format du fichier de destination de conversion.

Dans une mise en œuvre particulière, l'étape d'obtention 110 de relations de correspondance comprend une étape d'analyse 111 d'au moins un fichier intermédiaire qui définit des relations de correspondance prédéfinies entre au moins un mot-clé associé au contenu de la pluralité de sources de données et tout ou partie des champs du format du schéma prédéterminé.

Dans un exemple, l'étape d'analyse 111 du fichier intermédiaire comprend,
- une étape de calcul 1111 d'un degré de correspondance entre le mot-clé associé au contenu de la pluralité de sources de données et les champs du format du schéma prédéterminé, et
- une étape de détermination 1112 du champ du format du schéma prédéterminé qui possède un degré de correspondance supérieur à un seuil de degré de correspondance prédéfini, en tant que champ cible du format du schéma prédéterminé qui correspond au mot-clé.

Puis, le procédé 100 comprend une étape de formation 120 du fichier de destination de conversion à partir du schéma prédéterminé et des données du fichier d'origine de conversion qui sont impliquées dans les relations de correspondance.

Dans une mise en œuvre particulière, l'étape de formation 120 comprend une étape d'identification 121, à partir du fichier d'origine de conversion, d'au moins un chemin unique emprunté par un service de communication qui a transité via le ou les nœuds du réseau de télécommunication impliqués dans la mise en œuvre du service de communication discursif. Par ailleurs, dans cette mise en œuvre, on agence le schéma prédéterminé de manière à séparer, d'une part, le ou les nœuds du réseau de télécommunication impliqués dans la mise en œuvre du service de communication discursif et, d'autre part, le ou les chemins uniques empruntés par un service de communication qui a transité via le ou les nœuds du réseau de télécommunication, impliqués dans la mise en œuvre du service de communication discursif.

Grâce à cet agencement particulier, il est possible de représenter facilement tout graphe de transport d'un service de communication entre un émetteur et au moins un récepteur impliqué dans le service de communication. Par exemple, on pourra représenter par un graphe le ou les différents transports d'un service de communication émis vers plusieurs destinataires. Dans un autre exemple, on pourra représenter par un graphe les différents chemins de transports des paquets de données d'un même service de communication.

Dans un premier exemple, lorsque le schéma prédéterminé est un schéma XSD, l'étape de formation 120 du fichier de destination de conversion comprend la formation d'un fichier au format XML (« Extensible Markup Language », en anglais ; langage de balisage extensible, en français).

Dans un deuxième exemple, lorsque le schéma prédéterminé est un schéma JSON, l'étape de formation 120 du fichier de destination de conversion comprend la formation d'un fichier au format JSON.

Ensuite, le procédé 100 comprend une étape de détection 130 s'il reste des données du fichier d'origine de conversion qui ne sont pas impliquées dans les relations de correspondance.

En d'autres termes, il s'agit ici de déterminer si le fichier d'origine de conversion contient des données qui n'ont pas de correspondance avec au moins l'un des champs du schéma prédéterminé. Cette situation peut se produire lors de l'utilisation d'une nouvelle source de données ou lors de la modification de la source de données à l'origine du fichier d'origine de conversion. Dans un exemple, une telle modification peut être due à l'ajout de données par la source de données du fait d'une mise à jour du capteur d'interception associé ou de l'utilisation de nouveaux mécanismes d'interception.

Dans le cas où il reste des données du fichier d'origine de conversion qui ne sont pas impliquées dans les relations de correspondance, dites données sans correspondance, le procédé 100 comprend une étape d'extension 140 du format du fichier de destination de conversion pour y inclure tout ou partie des données sans correspondance.

On entend par extension, dans le cadre de l'invention, la possibilité de définir un nouveau type de données à partir d'un type de données spécifique d'une source, inconnu du format générique prédéterminé.

Ce mécanisme a pour effet de permettre la prise en compte de données spécifiques et également de nouveaux domaines d'interception de communication. Par ailleurs, dans le cadre des plateformes informatiques d'agrégation de données, ce mécanisme évite de développer une logique de traitement des données qui serait spécifique à chaque source de données.

Dans une mise en œuvre particulière, l'étape d'extension 140 du format du fichier de destination de conversion comprend l'extension d'un champ prédéterminé du schéma prédéterminé.

Ainsi, dans cette mise en œuvre particulière, l'extension consiste à enrichir un type de données en ajoutant du contenu et/ou des attributs.

En effet, dans le domaine de l'informatique, l'extension d'un schéma est une manière d'obtenir un type dérivé à partir d'un type de base. L'idée générale de l'extension est de rajouter du contenu et/ou des attributs à partir d'un autre type, soit prédéfini, soit déjà défini dans le schéma. En d'autres termes, l'extension s'apparente à la dérivation de types des langages de programmation orientés objet comme Java ou C++.

Par exemple, lorsque le schéma prédéterminé est du type XML, on introduit d'un type par l'élément « xsd:extension » dont l'attribut 'base' donne le nom du type de base. Celui-ci peut être un type prédéfini dans le schéma. Le contenu de l'élément « xsd:extension » explicite le contenu et les attributs à ajouter au type de base. L'élément « xsd:extension » est l'enfant d'un élément « xsd:simpleContent » ou « xsd:complexContent », lui-même enfant de l'élément « xsd:complexType ».

L'exemple suivant correspond à un extrait d'un fichier XML conforme à un schéma prédéterminé selon l'invention et qui contient des informations liées à une communication SMS. Dans cet exemple, c'est la balise '<extensions>' qui caractérise l'extension selon l'invention :

```
  <entry date="2020-10-10T12:00:42.395+02:00">
    <commonKernel>
      <signalHeader support="SMS" Service="Android Phone" volume="5000"
 duration="0" encrypt="CLAIR"/>
      <sender id="0666666666" type="phone"/>
      <receiver id="9292929492" type="tablet"/>
      <communicationNodes>
        <node id="2945388" name="NANTES2817727"/>
        <node id="1822213" name="PAU12"/>
      </communication Nodes>
      <communicationPaths>
        <nodeEvent id="2945388" date="2020-10-10T12:29:42.395+02:00"/>
        <nodeEvent id="1822213" date="2020-10-10T12:12:00.200+02:00"/>
      </communicationPaths>
      <content>lbi victu recreati et quiete, postquam abierat timor, vicos opulentos
 adorti equestrium adventu cohortium,quae casu propinquabant, nec resistere
  planitie porrecta conati digressi sunt retroque concedentes omne iuventutisrobur
  relictum in sedibus acciverunt.</content>
    </commonKernel>
    <extensions>
      <topic name ="MessageClass">
        <property name="className" value="flashMessage"/>
        <property name="classValue" value="0"/>
      </topic>
      <topic name ="Originatorlnfo">
        <property name="OriginatorIMSI" value="0228458288"/>
        <property name="Originator MSISDN" value="033+02828828"/>
      </topic>
     <topic name ="Recipientinfo">
        <property name="RecipientIMSI" value="01339929280"/>
        <property name="Recipient MSISDN" value="033+0282945228"/>
      </topic>
    </extensions>
  </entry>
```

L'invention concerne également un support d'enregistrement qui enregistre un programme d'instructions qui peut être exécuté par un processeur pour exécuter toutes les étapes du procédé 100 tel que décrit ci-dessus.

De manière non limitative, il peut s'agir d'un disque dur, d'un CD-ROM, d'un DVD, d'une disquette, d'une cassette ou d'une clé USB.

L'invention concerne enfin une structure de données à format générique prédéterminé. Ce format générique est indépendant de toute source de données, pour stocker des données.

Dans l'invention, on obtient la structure de données par un procédé 100 tel que décrit ci-dessus, à partir d'un fichier de données et d'un schéma prédéterminé qui définit la structure du format générique prédéterminé.

Dans une mise en œuvre particulière, la structure de données comprend une première partie de structure de données et une deuxième partie de structure de données qui sont séparées l'une de l'autre.

En particulier, la première partie de structure de données comprend une liste du ou des nœuds du réseau de télécommunication impliqués dans la mise en œuvre du service de communication discursif.

Par ailleurs, la deuxième partie de structure de données comprend une liste du ou des chemins uniques empruntés par un service de communication qui a transité via le ou les nœuds du réseau de télécommunication impliqués dans la mise en œuvre du service de communication discursif.

Grâce à cet agencement particulier, il est possible de représenter facilement tout graphe de transport d'un service de communication entre un émetteur et au moins un récepteur impliqué dans le service de communication. Par exemple, on pourra représenter par un graphe le ou les différents transports d'un service de communication émis vers plusieurs destinataires. Dans un autre exemple, on pourra représenter par un graphe les différents chemins de transport des paquets de données d'un même service de communication.

Dans un premier exemple, le schéma prédéterminé est un schéma XSD et la structure de données est un fichier XML.

Dans un deuxième exemple, le schéma prédéterminé est un schéma JSON et la structure de données est un fichier JSON.

## Revendications

1. Procédé (100) de conversion d'un premier fichier de données, dit fichier d'origine de conversion, en un deuxième fichier de données, dit fichier de destination de conversion, pour l'interception de communications, le fichier d'origine de conversion présentant un format propriétaire prédéterminé spécifique à une quelconque parmi une pluralité de sources de données, lesdites sources étant des capteurs adaptés pour intercepter lesdites données dans un réseau de télécommunication, le fichier de destination de conversion présentant un format générique prédéterminé indépendant de l'une quelconque parmi la pluralité de sources de données, le format générique prédéterminé étant associé à un schéma prédéterminé qui décrit la structure de données du format générique prédéterminé, et
comprenant une pluralité de champs, dont des champs identifiant lesdites sources, le procédé comprenant :
- une étape d'obtention (110) de relations de correspondance entre le format du fichier d'origine de conversion et le format du fichier de destination de conversion,
- une étape de formation (120) du fichier de destination de conversion à partir du schéma prédéterminé et des données du fichier d'origine de conversion qui sont impliquées dans les relations de correspondance,
- une étape de détection (130) s'il reste des données du fichier d'origine de conversion qui ne sont pas impliquées dans les relations de correspondance, dites données sans correspondance, et dans ce cas, une étape d'extension (140) du format du fichier de destination de conversion pour y inclure tout ou partie des données sans correspondance,
dans lequel les données du fichier d'origine de conversion sont relatives à au moins un signal électromagnétique discursif qui indique la mise en oeuvre d'au moins un service de communication dans au moins un réseau de télécommunication via au moins un support de communication et comprennent des informations issues de l'interception de télécommunications, lesdites données comprenant des identifiants du service et/ou du support de communication, au moins un instant de début du service de communication et un ou plusieurs identifiants d'équipements à l'origine et à la réception dudit signal, parmi lesquels un ou plusieurs équipements d'utilisateur et/ou un ou plusieurs nœuds du réseau de télécommunication impliqués dans la mise en oeuvre du service de communication discursif et des localisations desdits équipements,
dans lequel l'étape de formation (120) comprend une étape d'identification (121), à partir du fichier d'origine de conversion, d'au moins un chemin unique emprunté par un service de communication qui a transité via le ou les nœuds du réseau de télécommunication impliqués dans la mise en œuvre du service de communication discursif,
dans lequel le schéma prédéterminé est agencé de manière à séparer, d'une part, le ou les nœuds du réseau de télécommunication impliqués dans la mise en œuvre du service de communication discursif et, d'autre part, le ou les chemins uniques empruntés par le service de communication qui a transité via le ou les nœuds du réseau de télécommunication.

2. Procédé (100) selon la revendication 1, dans lequel le schéma prédéterminé comprend une pluralité de champs capables de décrire le plus grand nombre de données associées à la pluralité de source de données.

3. Procédé (100) selon l'une quelconque des revendications 1 à 2, dans lequel le schéma prédéterminé est un schéma XSD et l'étape de formation (120) du fichier de destination de conversion comprend la formation d'un fichier au format XML.

4. Procédé (100) selon l'une quelconque des revendications 1 à 3, dans lequel le schéma prédéterminé est un schéma JSON et l'étape de formation (120) du fichier de destination de conversion comprend la formation d'un fichier au format JSON.

5. Support d'enregistrement enregistrant un programme d'instructions pouvant être exécuté par un processeur pour exécuter toutes les étapes du procédé selon l'une quelconque des revendications 1 à 4.

6. Structure de données à format générique prédéterminé et indépendant de toute source de données pour stocker des données, la structure de donnée étant obtenue par un procédé (100) de conversion selon l'une quelconque des revendications 1 à 4 à partir d'un fichier de données et d'un schéma prédéterminé qui définit la structure du format générique prédéterminé,
ladite structure comprenant une première partie de structure de données et une deuxième partie de structure de données qui sont séparées l'une de l'autre, la première partie de structure de données comprenant une liste du ou des nœuds du réseau de télécommunication impliqués dans la mise en œuvre du service de communication discursif, la deuxième partie de structure de données comprenant une liste du ou des chemins uniques empruntés par un service de communication qui a transité via le ou les nœuds du réseau de télécommunication impliqués dans la mise en œuvre du service de communication discursif.

7. Structure de données selon la revendication 6, dans lequel le schéma prédéterminé est un schéma XSD et la structure de données est un fichier XML.

8. Structure de données selon la revendication 6, dans lequel le schéma prédéterminé est un schéma JSON et la structure de données est un fichier JSON.

## Patentansprüche

1. Verfahren (100) zum Umwandeln einer ersten Datendatei, genannt Ursprungsdatei der Umwandlung, in eine zweite Datendatei, genannt Zieldatei der Umwandlung, für das Abfangen von Kommunikationen, wobei die Ursprungsdatei der Umwandlung ein vorbestimmtes proprietäres Format aufweist, das spezifisch für eine beliebige aus einer Vielzahl von Datenquellen ist, wobei die Quellen Sensoren sind, die zum Abfangen der Daten in einem Telekommunikationsnetz konfiguriert sind, wobei die Zieldatei der Umwandlung ein vorbestimmtes generisches Format aufweist, das unabhängig von einer beliebigen aus der Vielzahl von Datenquellen ist, wobei das vorbestimmte generische Format einem vorbestimmten Schema zugeordnet ist, das die Datenstruktur des vorbestimmten generischen Formats beschreibt, und umfassend eine Vielzahl von Feldern, darunter Felder, die die Quellen identifizieren, das Verfahren umfassend:
- einen Schritt (110) zum Erhalten von Entsprechungsbeziehungen zwischen dem Format der Ursprungsdatei der Umwandlung und dem Format der Zieldatei der Umwandlung,
- einen Schritt (120) zum Ausbilden der Zieldatei der Umwandlung aus dem vorbestimmten Schema und den Daten der Ursprungsdatei der Umwandlung, die an den Entsprechungsbeziehungen beteiligt sind,
- einen Schritt (130), zum Erfassen, ob noch Daten der Ursprungsdatei der Umwandlung verbleiben, die nicht an den Entsprechungsbeziehungen beteiligt sind, genannt Daten ohne Entsprechung, und in diesem Fall einen Schritt (140) zum Erweitern des Formats der Zieldatei der Umwandlung zum Einschließen aller oder eines Teils der Daten ohne Entsprechung darin,
wobei die Daten der Ursprungsdatei der Umwandlung sich auf mindestens ein diskursives elektromagnetisches Signal beziehen, das die Implementierung mindestens eines Kommunikationsdienstes in mindestens einem Telekommunikationsnetz über mindestens ein Kommunikationsmedium anzeigt, und Informationen umfassen, die von dem Abfangen von Telekommunikationen stammen, die Daten umfassend Kennungen des Dienstes und/oder des Kommunikationsmediums, mindestens einen Startzeitpunkt des Kommunikationsdienstes und eine oder mehrere Kennungen von Vorrichtungen an dem Ursprung und bei dem Empfang des Signals, darunter eine oder mehrere Benutzervorrichtungen und/oder ein oder mehrere Knoten des Telekommunikationsnetzes, die an der Implementierung des diskursiven Kommunikationsdienstes beteiligt sind, und Lokalisierungen der Vorrichtungen,
wobei der Ausbildungsschritt (120) einen Identifikationsschritt (121) umfasst, um aus der Ursprungsdatei der Umwandlung mindestens einen eindeutigen Pfad zu identifizieren, der durch eine Kommunikationsdienst verwendet wird, der über den oder die Knoten des Telekommunikationsnetzes geleitet wurde, die an der Implementierung des diskursiven Kommunikationsdienstes beteiligt sind,
wobei das vorbestimmte Schema so angeordnet ist, dass es einerseits den oder die Knoten des Telekommunikationsnetzes, die an der Implementierung des diskursiven Kommunikationsdienstes beteiligt sind, und andererseits den oder die eindeutigen Pfade, die durch den Kommunikationsdienst verwendet werden, der über den oder die Knoten des Telekommunikationsnetzes geleitet wurde, trennt.

2. Verfahren (100) nach Anspruch 1, wobei das vorbestimmte Schema eine Vielzahl von Feldern umfasst, die fähig sind, die größte Anzahl von Daten zu beschreiben, die der Vielzahl von Datenquellen zugeordnet sind.

3. Verfahren (100) nach einem der Ansprüche 1 bis 2, wobei das vorbestimmte Schema ein XSD-Schema ist und der Schritt (120) zum Ausbilden der Zieldatei der Umwandlung die Ausbildung einer Datei in dem XML-Format umfasst.

4. Verfahren (100) nach einem der Ansprüche 1 bis 3, wobei das vorbestimmte Schema ein JSON-Schema ist und der Schritt (120) zum Ausbilden der Zieldatei der Umwandlung die Ausbildung einer Datei in dem JSON-Format umfasst.

5. Aufzeichnungsmedium, das ein Anweisungsprogramm aufzeichnet, das durch einen Prozessor zum Ausführen aller Schritte des Verfahrens nach einem der Ansprüche 1 bis 4 ausgeführt werden kann.

6. Datenstruktur mit generischem Format, das vorbestimmt und von jeder Datenquelle unabhängig ist, zum Speichern von Daten, wobei die Datenstruktur durch ein Verfahren (100) zum Umwandeln nach einem der Ansprüche 1 bis 4 aus einer Datendatei und einem vorbestimmten Schema erhalten wird, das die Struktur des vorbestimmten generischen Formats definiert,
die Struktur umfassend einen ersten Datenstrukturteil und einen zweiten Datenstrukturteil, die voneinander getrennt sind, der erste Datenstrukturteil umfassend eine Liste des oder der Knoten des Telekommunikationsnetzes, die an der Implementierung des diskursiven Kommunikationsdienstes beteiligt sind, der zweite Datenstrukturteil umfassend eine Liste des oder der eindeutigen Pfade, die durch einen Kommunikationsdienst verwendet werden, der über den oder die Knoten des Telekommunikationsnetzes geleitet wurde, die an der Implementierung des diskursiven Kommunikationsdienstes beteiligt sind.

7. Datenstruktur nach Anspruch 6, wobei das vorbestimmte Schema ein XSD-Schema ist und die Datenstruktur eine XML-Datei ist.

8. Datenstruktur nach Anspruch 6, wobei das vorbestimmte Schema ein JSON-Schema ist und die Datenstruktur eine JSON-Datei ist.

## Claims

1. Method (100) for converting a first data file, referred to as the conversion origin file, into a second data file, referred to as the conversion destination file, in order to intercept communications, the conversion origin file having a predetermined proprietary format specific to any one of a plurality of data sources, said sources being sensors suitable for intercepting said data in a telecommunication network, the conversion destination file having a predetermined generic format independent of any one of the plurality of data sources, the predetermined generic format being associated with a predetermined schema which describes the data structure of the predetermined generic format and comprises a plurality of fields, including fields identifying said sources, the method comprising:
- a step (110) of obtaining match relationships between the format of the conversion origin file and the format of the conversion destination file,
- a step (120) of forming the conversion destination file on the basis of the predetermined schema and the data in the conversion origin file that are involved in the match relationships,
- a step (130) of detecting whether there are any remaining data in the conversion origin file that are not involved in the match relationships, referred to as non-matching data, and in this case a step (140) of extending the format of the conversion destination file to include all or some of the non-matching data,
wherein the data in the conversion origin file relate to at least one discursive electromagnetic signal which indicates the implementation of at least one communication service in at least one telecommunication network via at least one communication medium and comprise information resulting from the interception of telecommunications, said data comprising identifiers of the service and/or of the communication medium, at least one start time of the communication service, and one or more identifiers of items of equipment from which said signal originates and which receive said signal, including one or more items of user equipment and/or one or more nodes of the telecommunication network that are involved in the implementation of the discursive communication service, and locations of said items of equipment,
wherein the forming step (120) comprises a step (121) of identifying, on the basis of the conversion origin file, at least one unique path taken by a communication service which has transited via the node or nodes of the telecommunication network that are involved in the implementation of the discursive communication service,
wherein the predetermined schema is arranged to separate the node or nodes of the telecommunication network that are involved in the implementation of the discursive communication service and the unique path or paths taken by the communication service which has transited via the node or nodes of the telecommunication network.

2. Method (100) according to claim 1, wherein the predetermined schema comprises a plurality of fields capable of describing the largest number of data associated with the plurality of data sources.

3. Method (100) according to any one of claims 1 to 2, wherein the predetermined schema is an XSD schema and the step (120) of forming the conversion destination file comprises forming a file in XML format.

4. Method (100) according to any one of claims 1 to 3, wherein the predetermined schema is a JSON schema and the step (120) of forming the conversion destination file comprises forming a file in JSON format.

5. Recording medium recording an instruction program executable by a processor in order to execute all the steps of the method according to any one of claims 1 to 4.

6. Data structure with a predetermined generic format independent of any data source for storing data, the data structure being obtained by a conversion method (100) according to any one of claims 1 to 4 on the basis of a data file and a predetermined schema which defines the structure of the predetermined generic format,
said structure comprising a first data structure part and a second data structure part which are separate from each other, the first data structure part comprising a list of the node or nodes of the telecommunication network that are involved in the implementation of the discursive communication service, the second data structure part comprising a list of the unique path or paths taken by a communication service which has transited via the node or nodes of the telecommunication network that are involved in the implementation of the discursive communication service.

7. Data structure according to claim 6, wherein the predetermined schema is an XSD schema and the data structure is an XML file.

8. Data structure according to claim 6, wherein the predetermined schema is a JSON schema and the data structure is a JSON file.
